# EUROPEAN PATENT APPLICATION

(11) **EP 4 722 848 A1**
(43) Date of publication of application: **08.04.2026**
(21) Application number: 23940610.1
(22) Date of filing: 05.06.2023
(51) Int. Cl.: G06F 1/16, G06F 1/18

(54) **CONNECTION APPARATUS AND ELECTRONIC DEVICE**

(71) Applicant: Panasonic Intellectual Property Management Co., Ltd., Kadoma-shi, Osaka 571-0057 (JP)
(72) Inventor: SATO, Takashi, Kadoma-shi, Osaka 571-0057 (JP); YOKOTA, Kiyoshi, Kadoma-shi, Osaka 571-0057 (JP); TAKETANI, Keiichi, Kadoma-shi, Osaka 571-0057 (JP)
(74) Representative: Eisenführ Speiser
(86) International application number: PCT/JP2023/020900
(87) International publication number: WO 2024/252503

(57) **Abstract**

An electronic device allows a first unit and a second unit to be attachably and detachably connected. The connection device includes a latch provided in the first unit and having inclined surfaces at two opposing end portions, respectively; an engaging portion provided in the second unit and engaged with a first end portion of the two end portions; and a rib provided in the second unit and opposing the engaging portion. The latch is movable in at least one horizontal direction. The latch is located between the engaging portion and the rib when the first unit and the second unit are connected.

## Description

### TECHNICAL FIELD

The present disclosure relates to a connection device and an electronic device.

### BACKGROUND ART

Patent Literature 1 discloses an electronic equipment including: an electronic component that includes a connector; and a main body housing that includes an accommodation recess capable of accommodating the electronic component and is provided with a main body-side connector capable of connecting to the connector of the electronic component in the accommodation recess, in which the electronic component is attachable to and detachable from the main body housing by configuring a locking claw portion of a latch member, which is provided to be movable with respect to the main body housing, to be lockable with a locking portion of the electronic component accommodated in the accommodation recess, and the electronic component and the main body housing are electrically connected by accommodating the electronic component in the accommodation recess of the main body housing and connecting the connector to the main body-side connector. The main body housing of the electronic equipment includes a latch retaining portion that moves in a direction in which a locked state of the locking claw portion to the locking portion is released, and is engaged with a pushing portion of the latch member that is pushed out and moved in a direction in which the electronic component is detached from the accommodation recess by the pushing portion, thereby restricting movement of the latch member in a locking direction by an elastic member.

### CITATION LIST

### PATENT LITERATURE

Patent Literature 1: JP5782472B2

### SUMMARY OF INVENTION

### TECHNICAL PROBLEM

The present disclosure has been made in view of the circumstances of the related art described above, and an object thereof is to provide a connection device and an electronic device capable of detachably connecting a plurality of units and achieving further reduction in size in the connection device and the electronic device including the plurality of units.

### SOLUTION TO PROBLEM

The present disclosure provides a connection device that attachably and detachably connects a first unit and a second unit to each other, the connection device including: a latch provided in the first unit and having inclined surfaces at two opposing end portions, respectively; an engaging portion provided in the second unit and engaged with a first end portion of the two end portions; and a rib provided in the second unit and opposing the engaging portion, in which the latch is movable in at least one horizontal direction, and the latch is located between the engaging portion and the rib when the first unit and the second unit are connected.

### ADVANTAGEOUS EFFECTS OF INVENTION

According to the present disclosure, in the connection device and the electronic device including the plurality of units, the plurality of units can be detachably connected, and further reduction in size can be achieved.

### BRIEF DESCRIPTION OF DRAWINGS

FIGS. 1Aand 1B illustrate views of an example of an electronic device, in which FIG. 1A is a view illustrating a front surface thereof viewed from a user, and FIG. 1B is a view illustrating a back surface thereof viewed from the user;
FIGS 2A and 2B illustrate views of an example of a back surface of the electronic device and access holes, in which FIG. 2A is a view illustrating an entire back surface of the electronic device, and FIG. 2B is an enlarged view of the access hole and surroundings thereof;
FIG. 3 is a view illustrating a monitor unit and a peripheral bar unit when connected;
FIGS. 4A to 4E are views illustrating a process of removing the monitor unit and the peripheral bar unit;
FIG. 5 is a view illustrating the monitor unit and the peripheral bar unit when not connected;
FIGS. 6A to 6C are views illustrating a process of connecting the monitor unit to the peripheral bar unit;
FIG. 7 is a view illustrating an example of the shape and size of a latch;
FIG. 8 is a view illustrating an example of the shapes and sizes of the latch, an engaging portion, and a rib;
FIG. 9 is a view illustrating an example of the shapes and sizes of the latch, the engaging portion, and the rib;
FIG. 10 is a view illustrating an example of the shapes and sizes of the latch, the engaging portion, and the rib;
FIG. 11 is a view illustrating an example of the shapes and sizes of the latch, the engaging portion, and the rib;
FIG. 12 is a view illustrating an example of the shape of the rib;
FIG. 13 is a view illustrating an example of the shapes and sizes of the latch, the engaging portion, and the rib;
FIG. 14 is a view illustrating an example of the shape and size of the latch;
FIG. 15 is a view illustrating an example of the shape of a housing of the peripheral bar unit;
FIG. 16 is a view illustrating an example of the latch viewed from above;
FIG. 17 is a view illustrating an example of the shape and size of the latch;
FIG. 18 is a view illustrating a state in which only one side of the monitor unit and only one side of the peripheral bar unit are detached;
FIGS. 19A and 19B illustrate views of an example of the movement of the latch and the engaging portion when only one side of the monitor unit and only one side the peripheral bar unit are detached, in which FIG. 19A illustrates a state before the detachment, and FIG. 19B illustrates a state after the detachment;
FIG. 20 is a view illustrating an example of a state in which the electronic device receives an impact;
FIGS. 21A and 21B illustrate views of an example of the latch, the engaging portion, and a through hole, in which FIG. 21A is a view illustrating a case where no through hole is present, and FIG. 21B is a view illustrating a case where the through hole is present; and
FIGS. 22Aand 22B illustrate views of an example of the through holes, in which FIG. 22A is a view illustrating a back surface of the entire monitor unit, and FIG. 22B is a view illustrating a back surface of the through holes and surroundings thereof.

### DESCRIPTION OF EMBODIMENTS

### (Background of Present Disclosure)

In a modern aircraft, each seat is provided with an electronic device (for example, in-flight entertainment (IFE)) such as a personal monitor capable of viewing movies, playing games, reading, checking flight status, and the like, or a seat monitor capable of providing other in-flight entertainment. In the related art, the electronic device is provided with a monitor, and a connection portion (in other words, insertion port) with an earphone jack, a universal serial bus (USB) port, and an accessory device for Wi-Fi (registered trademark) communication. However, compared with a long life cycle of the monitor, these connection portions may require updates due to changes in technique, and may have a shorter life cycle than the monitor. Therefore, an electronic device in which a monitor and a connection portion are attachable to and detachable from each other and the connection portion is replaceable has begun to appear.

Patent Literature 1 discloses the electronic equipment in which the electronic component that includes the connector such as a battery device is attachable to and detachable from the main body housing.

However, in an aircraft, a space around a seat is often narrow, and a space in which an electronic device can be installed may be limited. In particular, since the space around the seat is limited for passengers, the electronic device is naturally required to be reduced in size. Therefore, the connection portion provided in the electronic device is also required to be reduced in size. That is, there is a demand for a configuration that can be further reduced in size from the configuration disclosed in Patent Literature 1.

Hereinafter, an embodiment specifically disclosing configurations and operations of an electronic device according to the present disclosure will be described in detail with reference to the drawings as appropriate. However, unnecessarily detailed description may be omitted. For example, the detailed description of well-known matters and the redundant description of substantially the same configuration may be omitted. This is to avoid unnecessary redundancy of the following description and facilitate understanding of those skilled in the art. The accompanying drawings and the following description are provided for those skilled in the art to fully understand the present disclosure, and are not intended to limit the subject matters described in the claims. In addition, although a connection device will be described using an electronic device such as an IFE, the connection device may be used for any device other than the electronic device.

### 1. Regarding Electronic Device 1

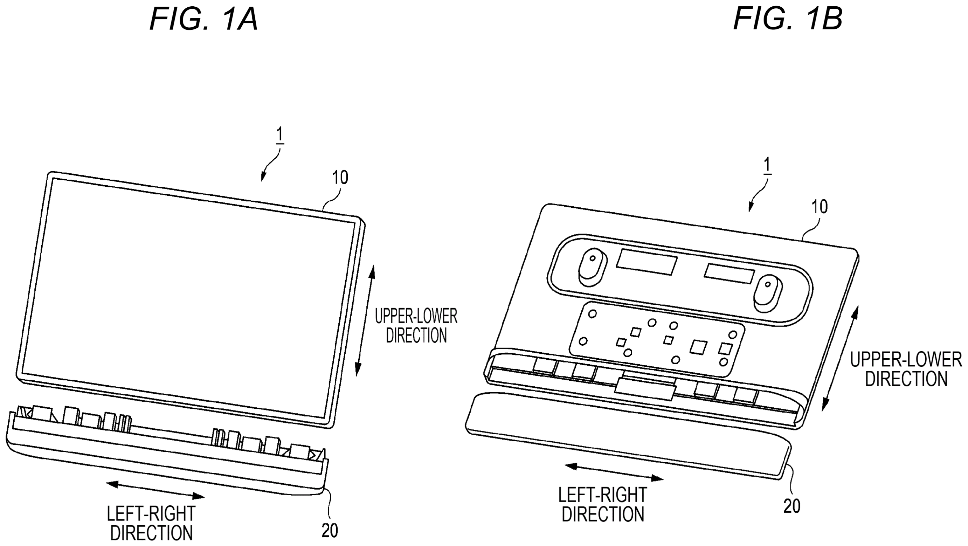

First, an electronic device 1 will be described. FIGS. 1A and 1B illustrate views of an example of the electronic device. FIG. 1A is a view illustrating a front surface thereof viewed from a user (a passenger), and FIG. 1B is a view illustrating a back surface thereof viewed from the user (the passenger). In the following description, a left-right direction is a direction illustrated in each of FIGS. 1A and 1B, but strictly speaking, a left end of a front surface is a right end of a back surface, and thus, in the following description, unless otherwise specified, the left-right direction is a direction regardless of the front surface or the back surface. In other words, the left-right direction coincides with a longitudinal direction of a housing of the electronic device 1.

The electronic device 1 is, for example, an IFE mounted around a seat of an aircraft or the like. The electronic device 1 includes a monitor unit 10 and a peripheral bar unit 20. The monitor unit 10 includes a display or a monitor. The peripheral bar unit 20 is provided with a connection portion (for example, an insertion port, an interface, and a port) with an earphone jack, a USB port, and an accessory device. However, although the monitor unit 10 is easy to use for a long time, the peripheral bar unit 20 not only experiences changes in demand over time, but also involves frequent physical contact, such as insertion ports, making the need for replacement generally higher.

### 2. Regarding Removal of Monitor Unit 10 and Peripheral Bar Unit 20

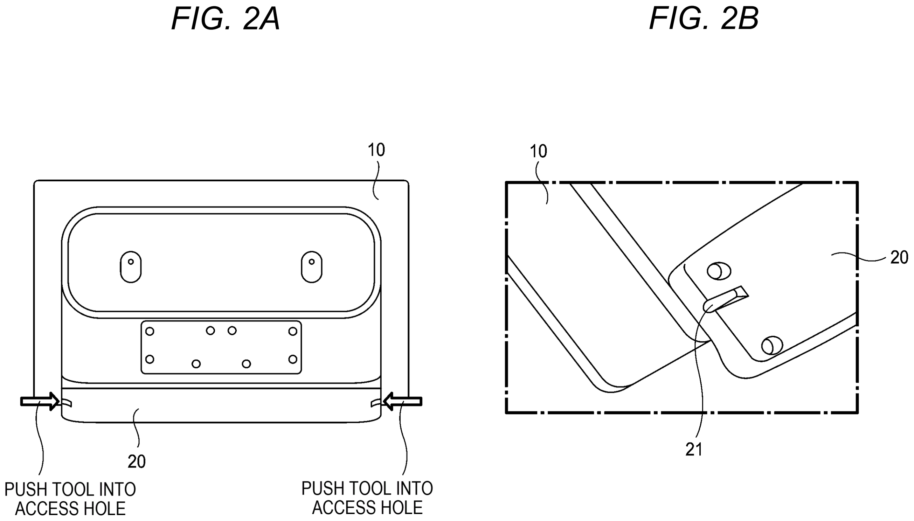

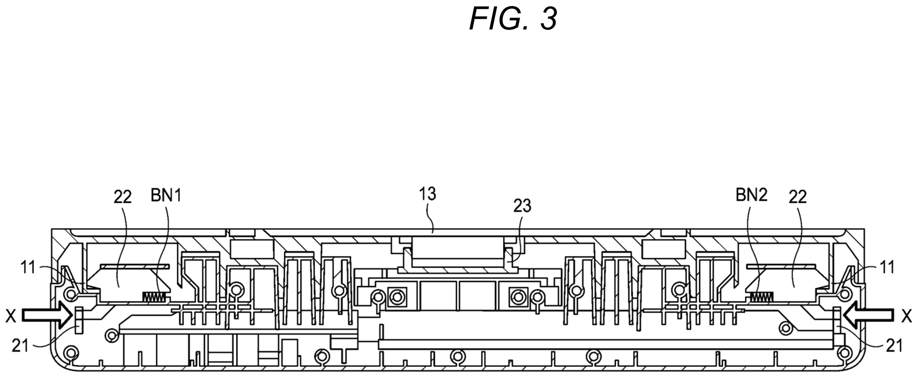

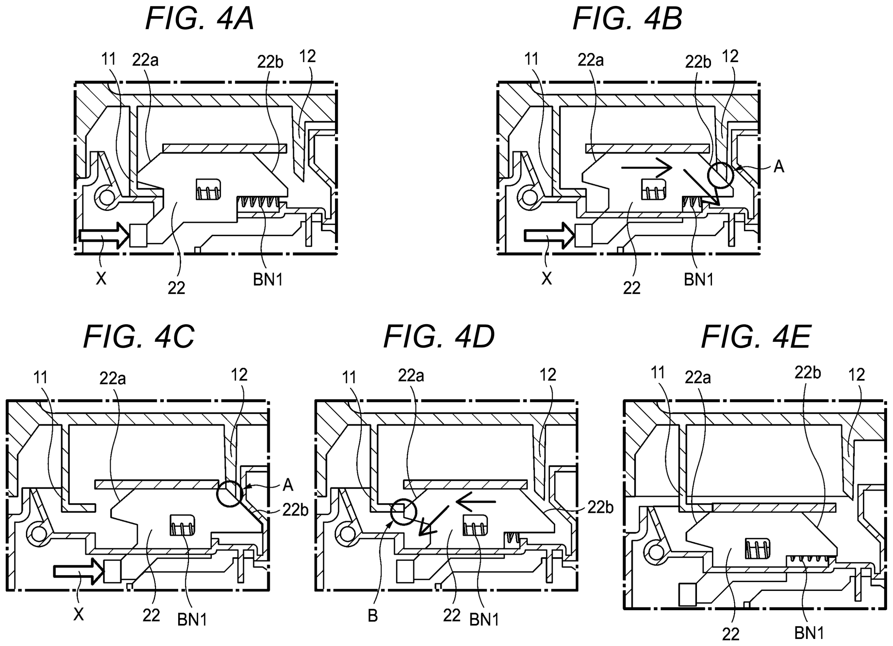

Next, removal of the monitor unit 10 and the peripheral bar unit 20 will be described. FIGS. 2A and 2B illustrate views of an example of a back surface of the electronic device and access holes. FIG. 2A is a view illustrating the entire back surface of the electronic device, and FIG. 2B is an enlarged view of the access hole and surroundings thereof. FIG. 3 is a view illustrating the monitor unit and the peripheral bar unit when connected. FIGS. 4A ro4E are views illustrating a process of removing the monitor unit and the peripheral bar unit, and states change from FIGS. 4A to 4E over time. Further, although FIGS. 4A to 4E illustrate only a configuration of the back surface of the peripheral bar unit 20 on a left side to simplify the description, the following description of FIGS. 4A to 4E can be similarly applied to a configuration of the same back surface on a right side.

As illustrated in each of FIGS. 2A and 2B, access holes 21 are provided in the peripheral bar unit 20 on a back surface side. By pushing a rod-shaped tool into each access hole 21, a user (for example, a maintenance person for the electronic device 1) can remove the monitor unit 10 and the peripheral bar unit 20 easily. The access holes 21 are provided at two locations in total, one on each end portion side of the peripheral bar unit 20 in the longitudinal direction (in other words, on each end portion side in the left-right direction).

As illustrated in FIG. 3, latches 22 are provided on left and right sides of the peripheral bar unit 20, respectively. The latches 22 and 22 are biased by springs BN1 and BN2, respectively, and receive outward forces (for example, forces in a direction opposite to an arrow X) from the springs BN1 and BN2, respectively. An end side (an outer side) of the latch 22 of the peripheral bar unit 20 is engaged by an engaging portion 11 of the monitor unit 10, and thus a state in which the monitor unit 10 and the peripheral bar unit 20 are physically connected is maintained. Further, the monitor unit 10 and the peripheral bar unit 20 are physically and electrically connected by a connection portion 13 (particularly, an insertion port) of the monitor unit 10 and a connection portion 23 (particularly, a plug) of the peripheral bar unit 20. By pushing the rod-shaped tool inward through the access hole 21 illustrated in FIGS. 2A and 2B, a force indicated by the arrow X is applied. Then, the latches 22 biased by the respective springs BN1 and BN2 are pushed inward, the latches 22 are separated from the engaging portions 11, and the monitor unit 10 and the peripheral bar unit 20 are removed.

The removal of the monitor unit 10 and the peripheral bar unit 20 will be described in detail with reference to each of FIGS. 4A to 4E. The latch 22 is a member including inclined surfaces 22a and 22b on left and right upper surfaces, respectively, and having a trapezoidal shape in which an upper side is shorter than a lower side. In FIG. 4A, the latch 22 is engaged with the engaging portion 11. That is, the monitor unit 10 and the peripheral bar unit 20 are in a connected state. By pushing the rod-shaped tool through the access hole 21, the force indicated by the arrow X is applied to the latch 22. Then, as illustrated in FIG. 4B, the latch 22 pushed by the force of the arrow X moves in a direction against the spring BN1 (in the illustrated example of FIG. 4B, a right direction of a back surface), thereby abutting on a region A of a rib 12 provided in the monitor unit 10. At this time, a lower side of the inclined surface 22b on a right side (the right direction of the back surface) of the latch 22 abuts on the rib 12. When the force of the arrow X is further applied to the latch 22 from the state of FIG. 4B, an abutment portion between the inclined surface 22b on the right side (the right direction of the back surface) of the latch 22 and the rib 12 shifts to an upper side (an upper direction) of the inclined surface 22b. As a result, as illustrated in FIG. 4C, the latch 22 moves in a lower direction. That is, the peripheral bar unit 20 moves in a direction in which the monitor unit 10 and the peripheral bar unit 20 are separated from each other. However, in the state in FIG. 4C, the monitor unit 10 and the peripheral bar unit 20 are not completely separated from each other. FIG. 4C illustrates a state in which the force of the arrow X is applied to the latch 22 when the latch 22 completes the movement in a horizontal direction, and a state in which the biased spring BN1 is contracted.

Next, after FIG. 4C, the force indicated by the arrow X is weakened, resulting in the state in FIG. 4D. After this, since the latch 22 moves to a left direction of the back surface due to a force of the spring BN1, the engaging portion 11 abuts on a lower side of the inclined surface 22a on a left side of the latch 22 (the left direction of the back surface). Then, since the force of the spring BN1 continues to be applied, the latch 22 continues to move, and a portion where the engaging portion 11 abuts on the inclined surface 22a gradually moves to an upper side of the inclined surface 22a on the left side of the latch 22 (the left direction of the back surface). As a result, as illustrated in FIG. 4E, the monitor unit 10 and the peripheral bar unit 20 are removed.

As described above, in the electronic device 1 that attachably and detachably connects the monitor unit 10 and the peripheral bar unit 20 to each other, the peripheral bar unit 20 includes the latch 22 that includes the inclined surfaces 22a and 22b on two left and right end portions thereof, respectively, and the monitor unit 10 includes the engaging portion 11 engaged with one of the left and right (left and right of the back surface) end portions of the latch 22 (the outer side in FIGS. 4A and 4E, that is, the left side of the back surface), and the rib 12 located on the other end portion side of the latch 22 (the inner side in FIGS. 4A to 4E, that is, the right side of the back surface) and opposing the engaging portion 11. The latch 22 is biased by the spring and is movable in the horizontal direction. As illustrated in FIG. 3 and FIG. 4A, when the monitor unit 10 and the peripheral bar unit 20 are connected to each other, the latch 22 is located between the engaging portion 11 and the rib 12. Here, the latch 22 is preferably located between the engaging portion 11 and the rib 12 in the horizontal direction and/or the vertical direction.

Further, when the monitor unit 10 and the peripheral bar unit 20 are removed, the latch 22 moves in an inward direction of the peripheral bar unit 20 in the horizontal direction due to a force applied inward to each of the springs BN1 and BN2, so that the inclined surface 22b provided on an end portion at an inner side of the latch 22 abuts on an end portion (a lower end) of the rib 12. Then, the peripheral bar unit 20 moves in a direction away from the monitor unit 10. Next, when the latch 22 moves in an outward direction of the peripheral bar unit 20 in the horizontal direction and the outer inclined surface 22a of the latch 22 abuts on the engaging portion 11, the peripheral bar unit 20 moves in a direction away from the monitor unit 10. In the above description, the inward direction and the outward direction may be reversed. Further, each of the springs BN1 and BN2 is not necessarily required.

A movement distance of the peripheral bar unit 20 in the vertical direction with respect to the monitor unit 10 in FIGS. 4A to 4E may be shorter than a length of the connection portion 23 in the vertical direction for electrically connecting the monitor unit 10 to the peripheral bar unit 20. That is, the connection portion 23 may not be completely separated from the connection portion 13 only by the movement of FIGS. 4A to 4E.

Further, an engagement position on the inner side of a lower surface of an outer end portion of the latch 22 may have an angle of 0 to 2 degrees with respect to the horizontal direction in a direction toward the outside. In FIGS. 4A to 4E and the like, the lower surface of the outer end portion of the latch 22 is inclined with respect to the upper direction. The angle is preferably 0 to 0.5 degrees. That is, the lower surface of the end portion of the latch 22 on an engaging portion 11 side may have an angle of 0 to 2 degrees with respect to the horizontal direction in a direction toward the outside of the engaging portion.

At least one of the left and right inclined surfaces of the latch 22 may have a curved shape in at least a part of the inclined surface.

### 3. Regarding Connection Between Monitor Unit 10 and Peripheral Bar Unit 20

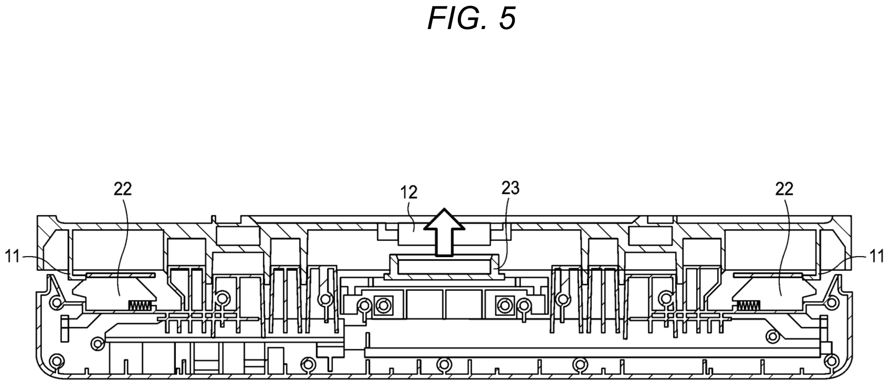

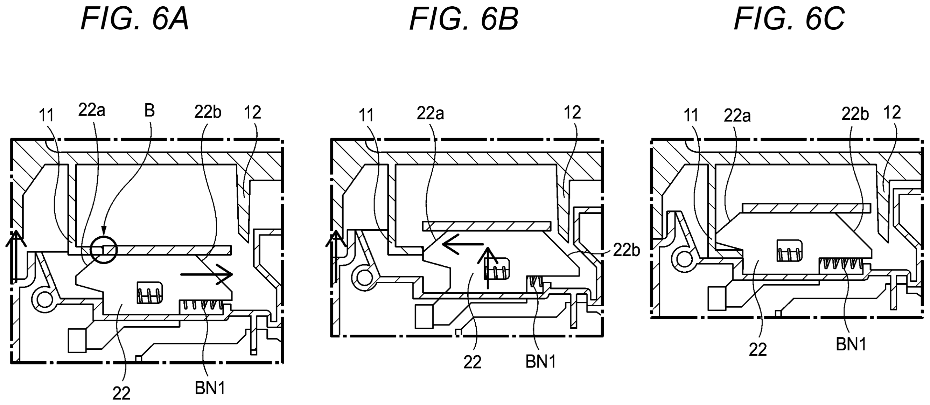

Next, a connection between the monitor unit 10 and the peripheral bar unit 20 will be described. FIG. 5 is a view illustrating the monitor unit and the peripheral bar unit when not connected. FIGS. 6A to 6C are views illustrating a process of connecting the monitor unit to the peripheral bar unit, and states from FIGS. 6A to 6C as time elapses. Further, although FIGS. 6A to 6C illustrate only a configuration of the back surface of the peripheral bar unit 20 on a left side to simplify the description, the following description of FIGS. 6A to 6C can be similarly applied to a configuration of the same back surface on a right side.

As illustrated in FIG. 5, when the monitor unit 10 and the peripheral bar unit 20 are not connected, naturally, the connection portion 13 and the connection portion 23 are not connected, and the latch 22 and the engaging portion 11 are not engaged.

Then, as illustrated in FIG. 6A, an upper surface of the outer inclined surface 22a of the latch 22 abuts on the engaging portion 11 in a region B. When the peripheral bar unit 20 is further pushed upward toward the monitor unit 10, the spring BN1 is pushed in. Then, the portion abutting on the engaging portion 11 in the region B shifts in the direction from the upper surface to a lower surface of the outer inclined surface 22a of the latch 22, and the state illustrated in FIG. 6B is obtained. Thereafter, when the peripheral bar unit 20 is further pushed upward toward the monitor unit 10, the engaging portion 11 does not abut on the outer inclined surface 22a of the latch 22, and the latch 22 is pushed outward (that is, the left direction of the back surface) by the force of the spring BN1. As a result, as illustrated in FIG. 6C, the monitor unit 10 and the peripheral bar unit 20 are engaged by the outer end portion of the latch 22 and the engaging portion 11. As a result, the connection portion 13 and the connection portion 23 can be physically and electrically connected.

### 4. Details of Latch 22, Engaging portion 11, and Rib 12

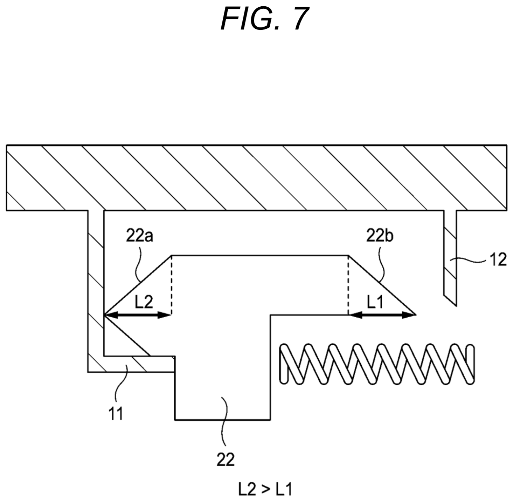

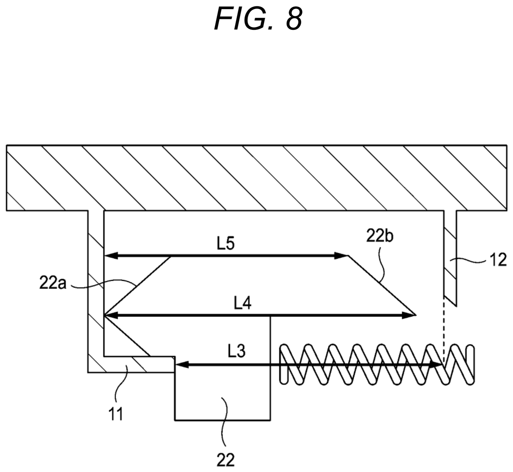

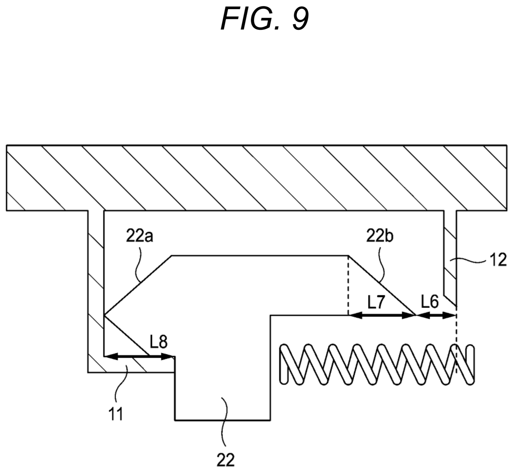

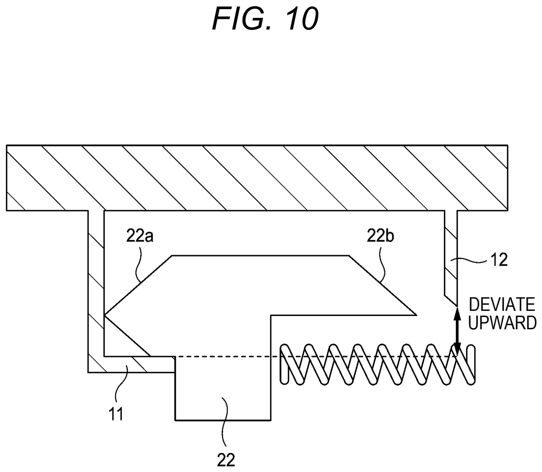

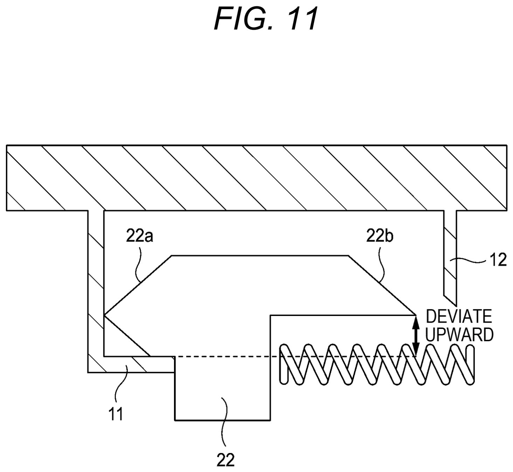

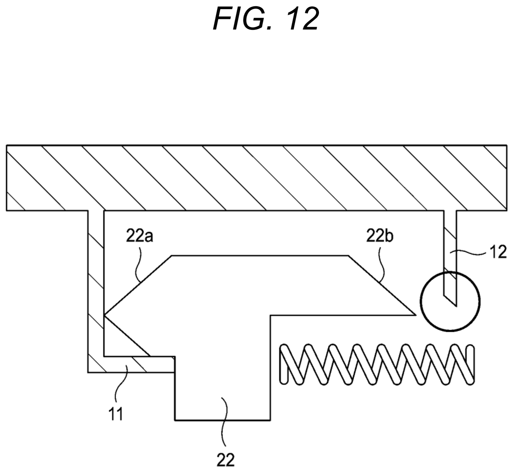

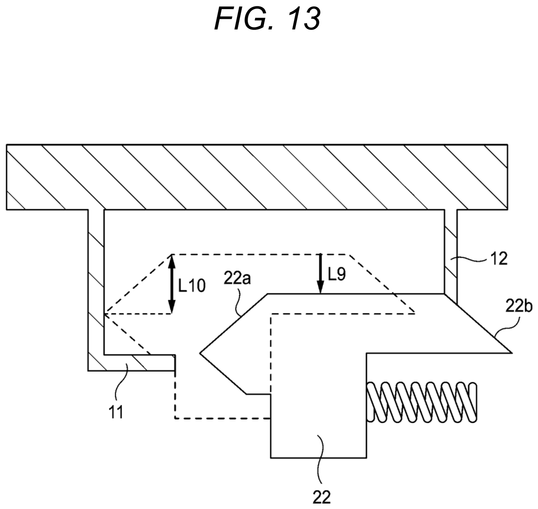

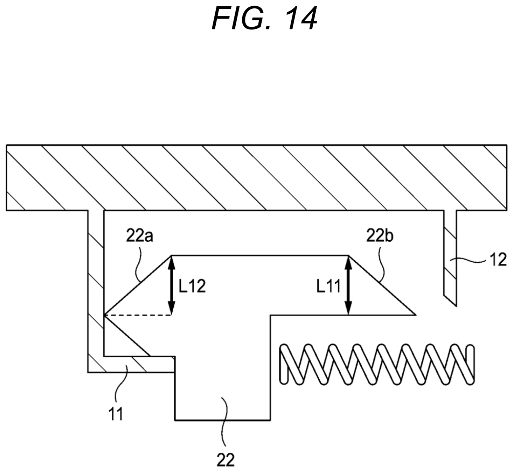

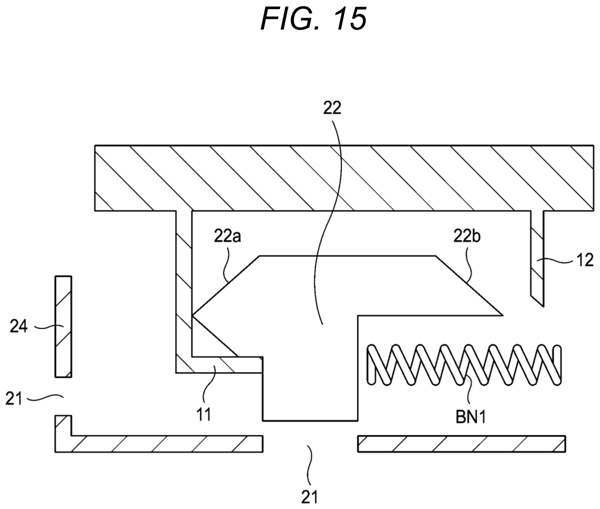

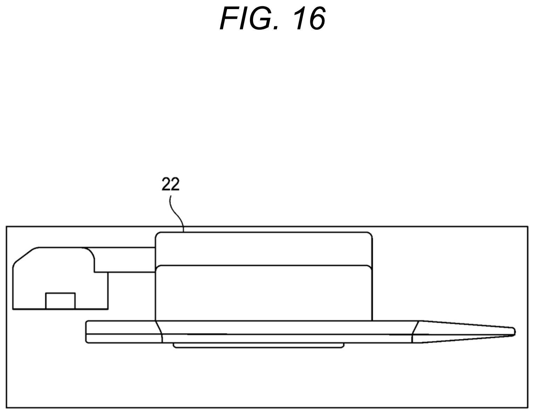

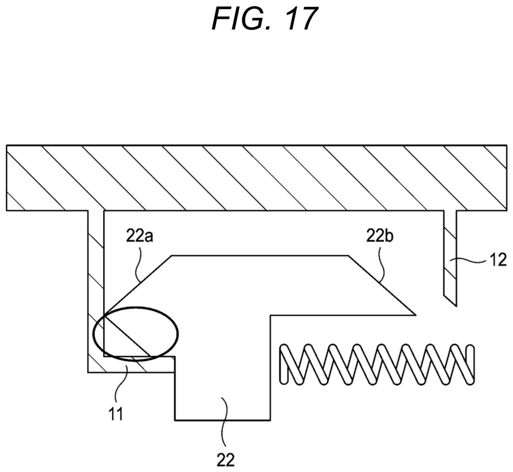

Next, the latch 22, the engaging portion 11, and the rib 12 will be described in detail. FIG. 7 is a view illustrating an example of the shape and size of the latch. FIG. 8 is a view illustrating an example of the shapes and sizes of the latch, the engaging portion, and the rib. FIG. 9 is a view illustrating an example of the shapes and sizes of the latch, the engaging portion, and the rib. FIG. 10 is a view illustrating an example of the shapes and sizes of the latch, the engaging portion, and the rib. FIG. 11 is a view illustrating an example of the shapes and sizes of the latch, the engaging portion, and the rib. FIG. 12 is a view illustrating an example of the shape of the rib. FIG. 13 is a view illustrating an example of the shapes and sizes of the latch, the engaging portion, and the rib. FIG. 14 is a view illustrating an example of the shape and size of the latch. FIG. 15 is a view illustrating an example of the shape of the housing of the peripheral bar unit. FIG. 16 is a view illustrating an example of the latch viewed from above. FIG. 17 is a view illustrating an example of the shape and size of the latch. FIGS. 7 to 15 and 17 illustrate the latch 22, the engaging portion 11, and the rib 12 on a left side of the electronic device 1 when viewed from the back surface of FIGS. 3 and 5.

As illustrated in FIG. 7, the latch 22 has the inclined surface 22a on the engaging portion 11 side (the outer side) and the inclined surface 22b on a rib 12 side (an inner side) at both left and right end portions, respectively. The length (see a length L1 in FIG. 7) of the inner inclined surface 22b in the horizontal direction (a lateral direction) may be longer than the length (see a length L2 in FIG. 7) of the outer inclined surface 22a in the horizontal direction (the lateral direction). That is, when the monitor unit 10 and the peripheral bar unit 20 are removed, the inner inclined surface 22b that first abuts on the rib 12 is longer in the horizontal direction than the outer inclined surface 22a that abuts on the engaging portion 11 thereafter.

Further, as illustrated in FIG. 8, a horizontal distance (see a length L3 in FIG. 8) of an opening portion between the engaging portion 11 and the rib 12 may be shorter than a horizontal length (see a length L4 in FIG. 8) between both ends of the latch 22, and may be longer than a horizontal length (see a length L5 in FIG. 8) of the portion of the latch 22 excluding the inner inclined surface 22b. That is, the horizontal distance (see the length L3 in FIG. 8) of the opening portion between the engaging portion 11 and the rib 12 may be shorter than the horizontal length (see the length L4 in FIG. 8) between both the ends of the latch 22, and may be longer than the horizontal length (see the length L5 in FIG. 8) of the portion of the latch 22 excluding the inclined surface 22b on the rib 12 side.

Further, as illustrated in FIG. 9, a distance (see a length (L6 + L7) in FIG. 9) obtained by adding a length (see the length L6 in FIG. 9) between the latch 22 and the rib 12 and a horizontal length (see the length L7 in FIG. 9) of the inner inclined surface 22b of the latch 22 may be longer than a horizontal length (see a length L8 in FIG. 9) of the engaging portion 11. That is, the distance (see the length (L6 + L7) in FIG. 9) obtained by adding the length (see the length L6 in FIG. 9) between the latch 22 and the rib 12 and the horizontal length (see the length L7 in FIG. 9) of the inclined surface 22b on the rib side of the latch 22 may be longer than the horizontal length (see the length L8 in FIG. 9) of the engaging portion 11.

As illustrated in FIG. 10, the lower end of the rib 12 may be located above a position where the latch 22 is engaged in the engaging portion 11 in the vertical direction.

Further, as illustrated in FIG. 11, a lower end of the inner inclined surface 22b of the latch 22 may be located above the position where the latch 22 is engaged in the engaging portion 11 in the vertical direction. That is, the lower end of the inclined surface 22b on the rib 12 side of the latch 22 may be located above the position where the latch 22 is engaged in the engaging portion 11 in the vertical direction.

As illustrated in FIG. 12, the lower end (an end portion surrounded by a circle) of the rib 12 may be provided with an inclination inclined in the same direction as the inner inclined surface 22b of the latch 22. That is, in FIG. 12, since the inner inclined surface 22b of the latch 22 extends from the upper left to the lower right, an inclined surface on the lower end of the rib 12 may similarly extend from the upper left to the lower right. The inclined surfaces does not need to have the same angle, and an error is preferably within 30 degrees.

Further, when the monitor unit 10 and the peripheral bar unit 20 are removed, the latch 22 moves in the inward direction of the peripheral bar unit 20 in the horizontal direction by a force of each of the springs BN1 and BN2, and when the inclined surface 22b provided on the end portion at the inner side of the latch 22 abuts on the end portion (the lower end) of the rib 12, the peripheral bar unit 20 moves in a direction away from the monitor unit 10. At this time, the movement distance of the latch 22 in the vertical direction (see a length L9 in FIG. 13) may be shorter than the length of the outer inclined surface 22a of the latch 22 in the vertical direction (see a length L10 in FIG. 13) as illustrated in FIG. 13. That is, The movement distance of the latch 22 in the vertical direction (see the length L9 in FIG. 13) may be shorter than the length of the inclined surface 22a of the latch 22 on the engaging portion 11 side in the vertical direction (see the length L10 in FIG. 13).

As illustrated in FIG. 14, the length of the inner inclined surface 22b of the latch 22 in the vertical direction (see a length L11 in FIG. 14) may be longer than the length of the outer inclined surface 22a of the latch 22 in the vertical direction (see a length L12 in FIG. 14). That is, the length of the inclined surface 22b on the rib 12 side of the latch 22 in the vertical direction (see the length L11 in FIG. 14) may be longer than the length of the inclined surface 22a on the engaging portion 11 side of the latch 22 in the vertical direction (see the length L12 in FIG. 14).

As illustrated in FIG. 15, the access hole 21, which is an opening, may be provided in the housing 24 provided in the peripheral bar unit 20. The access hole 21 may be provided horizontally outside (further outside than the engaging portion 11 when viewed from the rib 12) as an access hole 21, which is an opening that opens in a direction perpendicular to a movement direction of the latch 22, or as an access hole 21, which is an opening that opens horizontally below the latch 22. The latch 22 biased by each of the springs BN1 and BN2 can be horizontally moved from the access hole 21 by the rod-shaped tool or the like.

Further, as illustrated in FIG. 16, the width of the inclined surface of the latch 22 in a horizontal cross section (that is, the upper-lower direction of a paper surface of FIG. 16) may be narrowed toward an end thereof (that is, toward the right direction of the paper surface of FIG. 16). That is, a wedge shape is preferable. The inclined surface having a narrow cross section may be at least one of left and right inclined surfaces. Further, the portions of the first inclined surface 22a and the second inclined surface 22b where the inclination is provided may have the wedge shape.

Further, as illustrated in FIG. 17, an inclined surface may be provided on the lower surface of the outer end portion of the latch 22 so as to be away from the engaging portion 11 toward the outside. The lower surface of the outer end portion of the latch 22 may be a lower surface opposing the outer inclined surface 22a of the latch 22.

### 5. When Either One of Left and Right Engaging Portions 11 and Latch 22 are Disengaged

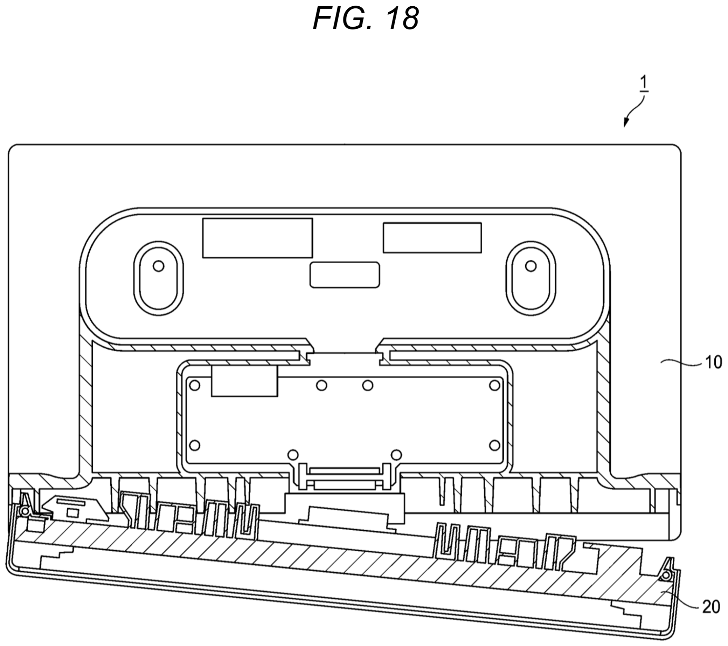

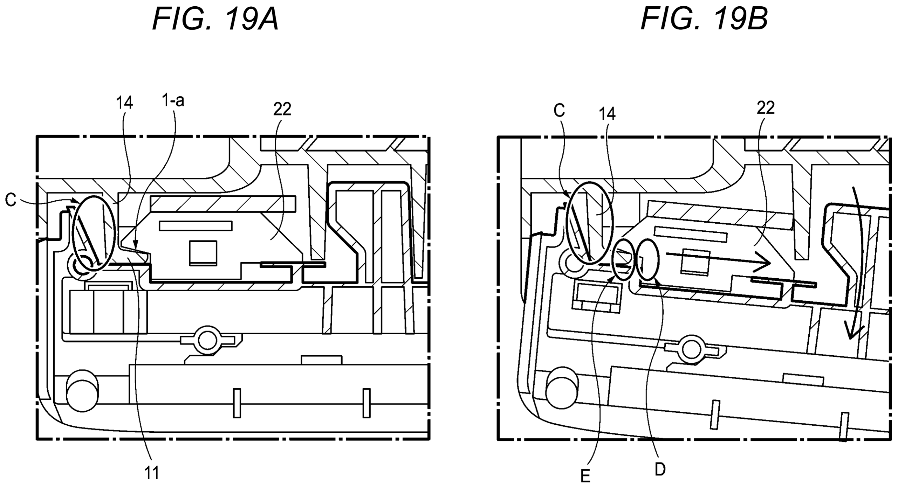

Next, a case where either one of the left and right engaging portions 11 and the latch 22 are disengaged will be described. FIG. 18 is a view illustrating a state in which only one side of the monitor unit and only one side of the peripheral bar unit are detached. FIGS. 19A and 19B are views illustrating an example of movement of the latch and the engaging portion when only one side of the monitor unit and only one side of the peripheral bar unit are detached. FIG. 19A illustrates a state before the detachment, and FIG. 19B illustrates a state after the detachment.

First, as illustrated in FIG. 3, in order to engage the monitor unit 10 with the peripheral bar unit 20, the engaging portion 11 of the monitor unit 10 and the latch 22 of the peripheral bar unit 20 are engaged on each of the left and right sides. If one of the left and right latches 22 is disengaged from the engaging portion 11 for some reason, the state illustrated in FIG. 18 is obtained. In FIG. 18, the right latch 22 is disengaged from the right engaging portion 11. Even in such a state, a design is required in which the left latch 22, the engaging portion 11, and other parts are not damaged.

Therefore, the electronic device 1 includes the latches 22 provided in the peripheral bar unit 20 and movable in the horizontal direction, and the engaging portions 11 provided in the monitor unit 10 and engaged with the respective latches 22 below the latches 22. The latch 22 has, on at least a part of the lower surface thereof engaged with the engaging portion 11, an inclination that is away from the engaging portion 11 toward the end of the latch 22. This inclination is an inclination in a region D of FIG. 19B. Note that this inclination may be an angle of 0 to 2 degrees with respect to the horizontal direction, and is preferably 0 to 0.5 degrees.

This inclination enables the engagement between the latch 22 and the engaging portion 11 in FIG. 19A, and when the latch 22 and the engaging portion 11 on the other side (for example, the right side of the back surface not illustrated in FIGS. 19A and 19B) are disengaged as illustrated in FIG. 19B (see FIG. 18), the latch 22 pivots by the engaging portion 11 and the inclination of the lower surface of the latch 22. That is, the latch 22 is pivotable about a portion (a base) of the inclined surface that abuts on the end portion of the engaging portion 11, and as a result, the peripheral bar unit 20 pivots, allowing the monitor unit 10 and the peripheral bar unit 20 to be safely removed in a sliding manner. As a result, even in the state illustrated in FIG. 18, it is easy to prevent damage to the monitor unit 10 and the peripheral bar unit 20.

An inclination may be provided in a region E in FIG. 19B, and the inclination of the region E may be different from the inclination of the region D. In particular, the inclination of the region E may be larger than the inclination of the region D with respect to the horizontal direction. That is, the latch 22 may have, on at least a part of the lower surface thereof engaged with the engaging portion 11, two inclinations that are away from the engaging portion 11 toward the end of the latch 22, and the two inclinations may have different angles.

As illustrated in FIGS. 19A and 19B, the engaging portion 11 has a vertical portion 14 that is coupled to the monitor unit 10 and extends in the vertical direction so that the latch 22 at the time of connection is accommodated inside. As illustrated in FIGS. 19A and 19B, a space may be provided outside the vertical portion 14 (a region C) without being in contact with the latch 22. In FIG. 19B, the space is smaller than that in FIG. 19A, but since there is the space, damage is less likely to occur.

The space (the region C) is larger on the upper side than on the lower side, and is, for example, fan-shaped in FIGS. 19A and 19B.

### 6. Regarding Countermeasures against Impact

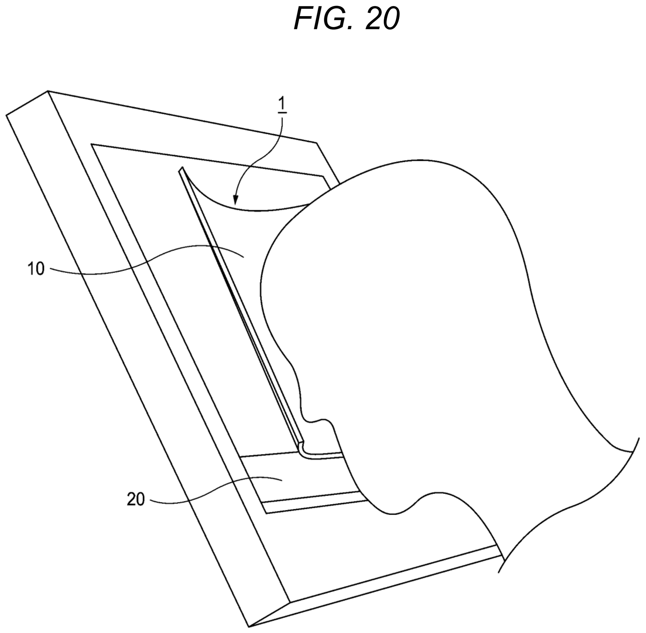

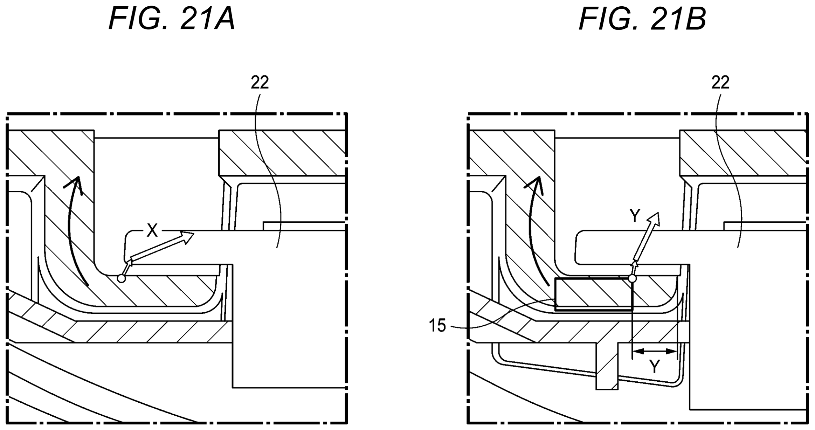

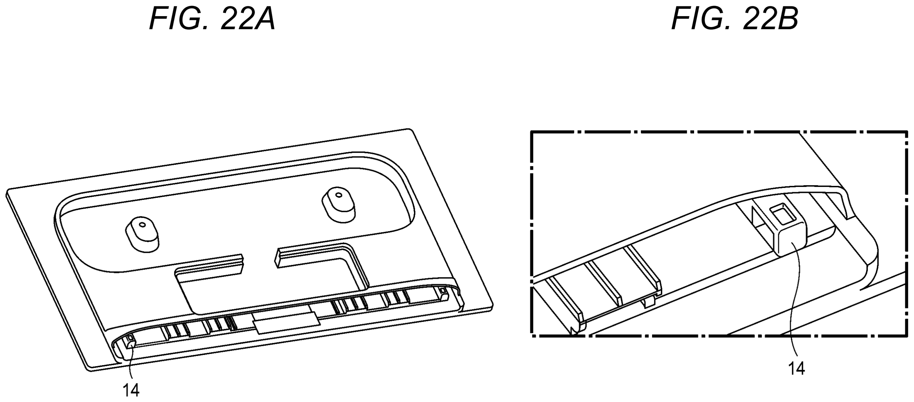

Next, countermeasures against an impact on the electronic device 1 will be described. FIG. 20 is a view illustrating an example of a state in which the electronic device receives an impact. FIGS. 21A and 21B illustrate views of an example of the latch, the engaging portion, and a through hole. FIG. 21A is a view illustrating a case where no through hole is present, and FIG. 21B is a view illustrating a case where a through hole is present. FIGS. 22A and 22B illustrate views of an example of the through holes. FIG. 22A is a view illustrating a back surface of the entire monitor unit, and FIG. 22B is a view illustrating a back surface of the through holes and surroundings thereof.

For example, when the electronic device 1 is mounted on an aircraft or the like, a large impact may be applied to the electronic device 1 due to a sudden accident or the like as illustrated in FIG. 20. At this time, there is a high possibility that the first impact is applied to the monitor unit 10 having a larger size.

At this time, if a through hole 15 is not provided as illustrated in FIG. 21A, when a force due to collision is applied to the electronic device 1, a force is applied to the latch 22 from the back surface of the monitor unit 10. This is because the impact is applied to the monitor unit 10 first, and therefore the deformation of the monitor unit 10 starts earlier than the deformation of the peripheral bar unit 20. At this time, as illustrated in FIG. 21A, since the force is applied to the end portion of the latch 22 from the back surface of the monitor unit 10, the direction of the force takes an angle close to the horizontal direction (see an arrow X in FIG. 21A). As a result, a force of a certain level or more is applied to the latch 22 to push it inward in the horizontal direction (to the right side of the back surface in FIG. 21A), making it easier for the latch 22 to disengage from the engaging portion 11. As a result, there is a possibility that the monitor unit 10 and the peripheral bar unit 20 are removed due to the impact.

Therefore, as illustrated in FIG. 21B, the through hole 15 may be provided in the back surface of the monitor unit 10 at a position opposing the outer end portion of the latch 22 (see FIGS. 22A and 22B). By providing the through hole 15, it is possible to prevent the outer end portion of the latch 22 from hitting the back surface of the monitor unit 10 even when the impact is applied to the electronic device 1. As a result, in FIG. 21B, since the force from the back surface of the monitor unit 10 is applied more inward to the latch 22, the force acts more in the depth direction on the latch 22 than in the state of FIG. 21A (see an arrow Y in FIG. 21B). As a result, the force pushing inward in the horizontal direction becomes smaller than that in the state of FIG. 21A. Therefore, it is possible to reduce the possibility that the monitor unit 10 and the peripheral bar unit 20 are removed due to the impact.

Note that the through hole 15 is not necessarily a through hole, and may be a recessed portion that does not penetrate. As illustrated in FIG. 22A, one through hole 15 may be provided on each of the left and right sides so as to correspond to each of the 22 provided on the left and right sides. As illustrated in FIGS. 22A and 22B, the through hole 15 is formed in a direction perpendicular to a monitor surface of the monitor unit 10.

As described above, the electronic device 1, which is the connection device according to the embodiment, is a connection device that attachably and detachably connects the first unit (the peripheral bar unit 20) and the second unit (the monitor unit 10) to each other, the connection device includes the latch 22 provided in the first unit and having inclined surfaces at two opposing end portions, the engaging portion 11 provided in the second unit and engaged with a first end portion of the two end portions of the latch 22, and the rib 12 provided in the second unit and opposing the engaging portion 11, the latch 22 is movable in at least one horizontal direction, and the latch 22 is located between the engaging portion 11 and the rib 12 when the first unit and the second unit are connected. Here, the latch 22 is preferably located between the engaging portion 11 and the rib 12 in the horizontal direction and/or the vertical direction.

Accordingly, in the connection device and the electronic device including the plurality of units, the plurality of units can be detachably connected, and further reduction in size can be achieved. Further, in addition to the reduction in size, it is also possible to simplify the removal and prevent accidental removal by a person other than those who are supposed to attach and detach the units, such 'as maintenance personnel.

Further, in the electronic device 1, which is the connection device according to the embodiment, when the first unit and the second unit are removed, if the latch 22 moves in a first horizontal direction, the second inclined surface 22b provided on a second end portion of two end portions abuts on the end portion of the rib 12, and the first unit may perform a first movement in the direction away from a second unit, and then if the latch 22 moves in a second horizontal direction, the first inclined surface 22a provided on the first end portion abuts on the engaging portion 11, and the first unit may perform a second movement in the direction away from the second unit. Accordingly, in the connection device and the electronic device including the plurality of units, the plurality of units can be detachably connected, and further reduction in size can be achieved.

Further, in the electronic device 1, which is the connection device according to the embodiment, the first end portion may have the first inclined surface 22a, the second end portion may have the second inclined surface 22b, and the horizontal length of the second inclined surface 22b may be longer than the horizontal length of the first inclined surface 22a. Accordingly, it is possible to further increase the movement distance of the peripheral bar unit 20 in the vertical direction during the first movement in which the tool is pushed into the access hole 21 to move the latch 22. As a result, the monitor unit 10 and the peripheral bar unit 20 can be more easily removed.

Further, in the electronic device 1, which is the connection device according to the embodiment, the second end portion may have the second inclined surface 22b, and the horizontal distance of the opening portion between the engaging portion 11 and the rib 12 may be shorter than the horizontal length between both ends of the latch 22 and longer than the horizontal length of the portion of the latch 22 excluding the second inclined surface 22b. Accordingly, the size of the climate in the horizontal direction by the latch 22, the engaging portion 11, and the rib 12 can be reduced. That is, the horizontal distance of the opening portion between the engaging portion 11 and the rib 12 is sufficient if the latch 22 can be disengaged from the engaging portion 11 by the opening portion when the latch 22 is moved to the maximum by the first movement.

Further, in the electronic device 1, which is the connection device according to the embodiment, the second end portion has the second inclined surface 22b, and the distance obtained by adding the length between the latch 22 and the rib 12 and the horizontal length of the second inclined surface 22b may be longer than the horizontal length of the engaging portion 11. Accordingly, the size of the climate in the horizontal direction by the latch 22, the engaging portion 11, and the rib 12 can be reduced. That is, when the latch 22 is moved to the maximum by the first movement, the latch 22 and the engaging portion 11 are disengaged, and the inclined surface 22b on the rib 12 side immediately comes into contact with the rib 12. Therefore, the latch 22 can be moved downward with a small number of operations.

Further, in the electronic device 1, which is the connection device according to the embodiment, the lower end of the rib 12 may be located above the engagement position of the engaging portion 11 in the vertical direction. Accordingly, the peripheral bar unit 20 can be moved in a direction away from the monitor unit 10 without the end portion of the latch on the rib 12 side being caught by the rib 12.

Further, in the electronic device 1, which is the connection device according to the embodiment, the second end portion may have a second inclined surface, and a lower end of the second inclined surface may be located above the engagement position of the engaging portion in the vertical direction. Accordingly, the peripheral bar unit 20 can be moved in a direction away from the monitor unit 10 without the end portion of the latch on the rib 12 side being caught by the rib 12.

Further, in the electronic device 1, which is the connection device according to the embodiment, the second end portion may have the second inclined surface 22b, and the lower end of the rib 12 may be provided with an inclination inclined in the same direction as the second inclined surface 22b. Accordingly, a contact area when the second inclined surface 22b abuts on the rib 12 can be increased, so that the force can be easily transmitted, and the peripheral bar unit 20 can be moved in the direction away from the monitor unit 10.

Further, in the electronic device 1, which is the connection device according to the embodiment, the movement distance of the latch 22 in the vertical direction by the first movement may be shorter than the length of the first inclined surface 22a in the vertical direction. Accordingly, after the first movement, the first inclined surface 22a abuts on the engaging portion 11, and the second movement is enabled.

Further, in the electronic device 1, which is the connection device according to the embodiment, the first end portion may have the first inclined surface 22a, the second end portion may have the second inclined surface 22b, and the length of the second inclined surface 22b in the vertical direction may be longer than the length of the first inclined surface 22a in the vertical direction. Accordingly, after the first movement, the first inclined surface 22a abuts on the engaging portion 11, and the second movement is enabled.

Further, the electronic device 1, which is the connection device according to the embodiment may further include a connection portion 23 (which may be the connection portion 13) between the peripheral bar unit 20, which is the first unit, and the monitor unit 10, which is the second unit, and a sum of a movement distance in the vertical direction by the first movement and a movement distance in the vertical direction by the second movement may be longer than the length of the connection portion 23 in the vertical direction. Accordingly, a user such as the maintenance person can reliably remove the peripheral bar unit 20 and the monitor unit 10.

Further, in the electronic device 1, which is the connection device according to the embodiment, the engagement position of the lower surface of the first end portion of the latch 22 may have an inclined surface having an angle of 0 to 2 degrees with respect to the horizontal direction in a direction toward the first end portion. As a result, the engagement between the latch 22 and the engaging portion 11 can be made more reliable.

Further, in the electronic device 1, which is the connection device according to the embodiment, the peripheral bar unit 20, which is the first unit, may include the housing 24 that accommodates the latch 22, and the housing 24 may include, on a side closer to the first end portion than to the second end portion, the access hole 21, which is an opening in the direction perpendicular to the movement direction of the latch 22 or the access hole 21, which is an opening in the horizontal direction below the latch. Accordingly, the latch 22 can be horizontally moved with a simple configuration.

Further, the first end portion may have the first inclined surface 22a, the second end portion may have the second inclined surface 22b, and at least one of the first inclined surface 22a and the second inclined surface 22b may have a curve. The curve may be convex or concave. Accordingly, the abutment between the latch 22 and the rib 12 or the engaging portion 11 can be suitably performed.

In the electronic device 1, which is the connection device according to the embodiment, the peripheral bar unit 20, which is the first unit, may be provided with an elastic member that biases the latch 22 in the horizontal direction. Accordingly, the movement of the latch 22 and the abutment between the latch 22 and the rib 12 or the engaging portion 11 can be suitably performed.

Further, in the electronic device 1, which is the connection device according to the embodiment, the first end portion may have the first inclined surface 22a, the second end portion may have the second inclined surface 22b, and the width of a horizontal cross section of at least one of the first inclined surface 22a and the second inclined surface 22b may be narrowed toward the end thereof. Accordingly, the abutment between the latch 22 and the rib 12 or the engaging portion 11 can be suitably performed.

Further, in the electronic device 1, which is the connection device according to the embodiment, an inclined surface may be provided on the lower surface of the first end portion of the latch 22 so as to be away from the engaging portion 11 toward the end of the first end portion. This allows the latch 22 to return to a position where the engaging portion 11 and the latch 22 can be engaged with each other if the pressing force applied by a root inserted through the access hole 21 is lost midway.

The electronic device 1 is an electronic device 1 that includes a first unit (the peripheral bar unit 20) and a second unit (the monitor unit 10) that are attachably and detachably connected, the electronic device 1 includes the latch 22 provided in the first unit and having the inclined surfaces 22a and 22b at two opposing end portions, the engaging portion 11 provided in the second unit and engaged with the first end portion of the two end portions, and the rib 12 provided in the second unit and opposing the engaging portion 11, the latch 22 is movable in at least one horizontal direction, and the latch 22 is located between the engaging portion 11 and the rib 12 when the first unit and the second unit are connected. Here, the latch 22 is preferably located between the engaging portion 11 and the rib 12 in the horizontal direction and/or the vertical direction.

Accordingly, in the connection device and the electronic device including the plurality of units, the plurality of units can be detachably connected, and further reduction in size can be achieved. Further, in addition to the reduction in size, it is also possible to simplify the removal and prevent accidental removal by a person other than those who are supposed to attach and detach the units, such as maintenance personnel.

Although various embodiments have been described above with reference to the accompanying drawings, the present disclosure is not limited thereto. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, components in the various embodiments described above may be combined freely in a range without departing from the spirit of the invention.

### INDUSTRIAL APPLICABILITY

The present disclosure is useful as a presentation of a connection device and an electronic device capable of attachably and detachably connecting a plurality of units and achieving further reduction in size in the connection device and the electronic device including the plurality of units.

### REFERENCE SIGNS LIST

1: electronic device
10: monitor unit
11: engaging portion
12: rib
13: connection portion
14: vertical portion
15: through hole
20: peripheral bar unit
21: access hole
22: latch
23: connection portion
24: housing

## Claims

1. A connection device that attachably and detachably connects a first unit and a second unit to each other, the connection device comprising:
a latch provided in the first unit and having inclined surfaces at two opposing end portions, respectively;
an engaging portion provided in the second unit and engaged with a first end portion of the two end portions; and
a rib provided in the second unit and opposing the engaging portion, wherein
the latch is movable in at least one horizontal direction, and
the latch is located between the engaging portion and the rib when the first unit and the second unit are connected.

2. The connection device according to claim 1, wherein
when the first unit and the second unit are removed,
by moving the latch in a first horizontal direction, when the second inclined surface provided on a second end portion of two end portions abuts on the end portion of the rib, the first unit performs a first movement in a direction away from a second unit, and
then by moving the latch in a second horizontal direction, when the first inclined surface provided on a first end portion abuts on the engaging portion, the first unit performs a second movement in a direction away from the second unit.

3. The connection device according to claim 2, wherein
the first end portion has a first inclined surface, and the second end portion has a second inclined surface, and
a horizontal length of the second inclined surface is longer than a horizontal length of the first inclined surface.

4. The connection device according to claim 2, wherein
the second end portion has a second inclined surface, and
a horizontal distance of an opening portion between the engaging portion and the rib is shorter than a horizontal length between both ends of the latch and longer than a horizontal length of a portion of the latch excluding the second inclined surface.

5. The connection device according to claim 2, wherein
the second end portion has a second inclined surface, and
a distance obtained by adding a length between the latch and the rib and a horizontal length of the second inclined surface is longer than a horizontal length of the engaging portion.

6. The connection device according to claim 2, wherein
a lower end of the rib is located above an engagement position of the engaging portion in a vertical direction.

7. The connection device according to claim 2, wherein
the second end portion has a second inclined surface, and
a lower end of the second inclined surface is located above an engagement position of the engaging portion in a vertical direction.

8. The connection device according to claim 2, wherein
the second end portion has a second inclined surface, and
a lower end of the rib may be provided with an inclination inclined in a same direction as the second inclined surface.

9. The connection device according to claim 2, wherein
a movement distance of the latch in a vertical direction by the first movement is shorter than a length of the first inclined surface in the vertical direction.

10. The connection device according to claim 2, wherein
the first end portion has a first inclined surface, and the second end portion has a second inclined surface, and
a length of the second inclined surface in a vertical direction is longer than a length of the first inclined surface in the vertical direction.

11. The connection device according to claim 2, further comprising:
a connection portion between the first unit and the second unit, wherein
a sum of a movement distance in a vertical direction by the first movement and a movement distance in the vertical direction by the second movement is longer than a length of the connection portion in the vertical direction.

12. The connection device according to claim 2, wherein
an engagement position of a lower surface of the first end portion of the latch has an angle of 0 to 2 degrees with respect to the horizontal direction in a direction toward the first end portion.

13. The connection device according to claim 2, wherein
the first unit includes a housing that accommodates the latch, and
the housing includes, on a side closer to the first end portion than to the second end portion, an opening in a direction perpendicular to the movement direction of the latch or an opening in the horizontal direction below the latch.

14. The connection device according to claim 2, wherein
the first end portion has a first inclined surface, and the second end portion has a second inclined surface, and
at least one of the first inclined surface and the second inclined surface has a curve.

15. The connection device according to claim 2, wherein
the first unit is provided with an elastic member that biases the latch in the horizontal direction.

16. The connection device according to claim 2, wherein
the first end portion has a first inclined surface, and the second end portion has a second inclined surface, and
a width of a horizontal cross section of at least one of the first inclined surface and the second inclined surface is narrowed toward an end thereof.

17. The connection device according to claim 2, wherein
an inclined surface is provided on a lower surface of the first end portion of the latch so as to be away from the engaging portion toward an end of the first end portion.

18. An electronic device that includes a first unit and a second unit that are attachably and detachably connected, the electronic device comprising:
a latch provided in the first unit and having inclined surfaces at two opposing end portions, respectively;
an engaging portion provided in the second unit and engaged with a first end portion of the two end portions; and
a rib provided in the second unit and opposing the engaging portion, wherein
the latch is movable in at least one horizontal direction, and
the latch is located between the engaging portion and the rib when the first unit and the second unit are connected.
